# EUROPÄISCHE PATENTSCHRIFT

(11) **EP 1 152 310 B1**
(45) Veröffentlichungstag und Bekanntmachung des Hinweises auf die Patenterteilung: **17.08.2005**
(21) Anmeldenummer: 01109312.7
(22) Anmeldetag: 12.04.2001
(51) Int. Cl.: G05B 19/414, B26D 5/20

(54) **Schneideeinrichtung**
Cutting device
Appareil de coupe

(30) Priorität: 03.05.2000 DE 10021449
(43) Veröffentlichungstag der Anmeldung: 07.11.2001
(73) Patentinhaber: Heidelberger Druckmaschinen Aktiengesellschaft, 69115 Heidelberg (DE)
(72) Erfinder: Matthes, Wolfgang, Dr., 04315 Leipzig (DE); Richter, Lutz, 04435 Schkeuditz (DE); Steinert, Andreas, 04205 Leipzig (DE)

(56) Entgegenhaltungen:
- EP-A- 0 401 375
- EP-A- 0 422 651
- EP-A- 0 436 887
- EP-A- 0 941 817
- US-A- 3 981 212
- US-A- 4 505 173

## Beschreibung

Die Erfindung betrifft eine Schneideeinrichtung nach dem Oberbegriff des Anspruchs 1, sowie einen Verfahren nach dem Oberbegriff des Anspruchs 8. Eine solche Einrichtung bzw. Verfahren ist z.B. aus US 3 981 212 A bekannt.

In einem Sammelhefter werden die von einer Heftmaschine kommenden Produkte über einen Zuführtisch einem Transportsystem einer Schneideeinrichtung zugeführt. Die von diesem Transportsystem übernommenen Produkte werden an vordere Stopper transportiert und ausgerichtet. Durch die Schneideinrichtung wird der dreiseitige Beschnitt der Produkte durchgeführt. Dabei gibt es zwei unterschiedliche Schneidprinzipien: Schneiden der Produkte im Stillstand und Schneiden der Produkte in der Bewegung. Während das Schneiden der Produkte in der Bewegung erwartungsgemäß kompliziert und aufwendig ist, so dass es meist nur bei Hochleistungsmaschinen über 16000 T/h eingesetzt wird, kommt im unteren und mittleren Leistungsbereich das Schneiden im Stillstand zum Einsatz. Hierbei wird zwischen zwei unterschiedlichen Systemen unterschieden. Beim ersten wird ein Bändertransportsystem eingesetzt werden, welches die Produkte unmittelbar vor dem Beschnitt entspannt und sich dabei weiterbewegt. Beim zweiten kann ein Bändertransportsystem eingesetzt werden, welches die Produkte fixiert und mit diesen kurz vor dem Schneidvorgang zum Stillstand kommt.

Die Durchführung des dreiseitigen Beschnitts erfolgt in einzelnen Schritten. Bei Stillstand des Transportsystems in einer ersten Schneidestation erfolgt der Vorderschnitt. Dann wird das Produkt durch das Transportsystem in eine zweite Schneidestation befördert. Es erfolgt der Kopf- und Fußbeschnitt ebenfalls im Stillstand des Transportsystems. Schließlich wird das dreiseitig beschnittene Produkt in die Auslage transportiert.

Zur exakteren Positionsfixierung der Produkte wird in der US 3,981,212 A eine Schneideeinrichtung zum Randbeschneiden von Produkten vorgeschlagen, die in der Lage ist, den Antrieb der Messer (ein Vorderschnittmesser und zwei Seitenschnittmesser) vom Antrieb für die Klemmen, welche die Bogen stationär während des Beschnitts halten, zu entkoppeln. Das Transportsystem ist starr mit dem Antrieb der Messerbewegung verbunden.

In der US 4,505,173 A wird hierzu eine Schneideeinrichtung zum Randbeschneiden von Produkten beschrieben, in der zu einer genauen Ausrichtung der Produkte vor dem Beschnitt von allen vier Seiten Stopper an das Produkt herangeführt werden.

Gemeinsame Schwierigkeit aller derartigen Schneideeinrichtungen ist, dass aufgrund der starren Verbindung zwischen dem Antrieb für das Transportsystem und dem Antrieb der Messerbewegung das Produkt mit einer gewissen Geschwindigkeit an die vorderen Stopper anschlägt. Dadurch kann es zu einem Rückprall des Produktes kommen. Zur Milderung dieses Effekts wird das Transportsystem derart eingestellt, dass ein Nachlauf nach dem Auftreffen am vorderen Stopper erfolgt. Dabei ist in den meisten Fällen eine Relativbewegung zwischen Produkt und Transportmittel unvermeidbar. Der damit verbundene reibende Kontakt kann zu Markierungen und Spuren am Produkt führen. Es sind zusätzliche Stopper zur Ausrichtung und zum Zurückhalten des Produktes notwendig. Diese können ebenfalls zu Markierungen am Produkt führen. Zur Energieübertragung von der Antriebsquelle und zur Umwandlung der Bewegungsform des Antriebs für das Transportsystem werden Kurvenschrittgetriebe eingesetzt. Eine Optimierung des Bewegungsablaufes zur Verringerung der Auftreffgeschwindigkeit des Produktes am vorderen Stopper ist nur im engen Rahmen möglich. Eine Abstimmung des Transportsystems mit der Messerbewegung muss für ein, also im allgemeinen das größte Bogenformat erfolgen, so dass eine erforderliche formatabhängige Optimierung der Transportbewegung unmöglich ist.

Aufgabe der vorliegenden Erfindung ist es daher, ein Transportsystem zur Verfügung zu stellen, bei welchem die Auftreffgeschwindigkeit des Produktes am vorderen Stopper produktabhängig einstellbar ist und ein möglichst geringer Nachlauf des Transportsystems notwendig wird.

Diese Aufgabe wird erfindungsgemäß durch die Schneideeinrichtung mit den Merkmalen gemäß Anspruch 1, sowie durch einen Verfahren mit den Merkmalen gemäß Anspruch 8 gelöst.

In einer bevorzugten Ausführungsform weist die Schneideeinrichtung wenigstens einen steuerbaren Motor für das Transportsystem und einen steuerbaren Motor für die Messerbewegung auf. Typischerweise sind diese Antriebsquellen Servomotoren. Beide Motoren sind mit entsprechenden Steuereinheiten zum Austausch von Daten und/oder Steuersignalen verbunden. Vorteilhaft ist darüber hinaus auch eine zentrale Steuerung für diese einzelnen Komponenten.

Der Einsatz einer erfindungsgemäßen Schneideeinrichtung führt zu wesentlichen Vorteilen. Es ist möglich, eine Minimierung des Rückpralls des Produktes zu erreichen, da mit Hilfe einer elektronischen Steuerung die Bewegungsabläufe des Transportsystems auf die Messerbewegung formatabhängig eingestellt werden kann. Damit wird das Produkt auch bei hohen Geschwindigkeiten sanft an die vorderen Stopper transportiert, so dass eine höhere Schnittgenauigkeit erreicht werden kann. Mögliche Deformationen der Vorderkante des Produktes mit einhergehenden Markierungen und Spuren beim Auftreffen an die vorderen Stopper mit hoher Geschwindigkeit werden vermieden. Ebenso erreicht man bequem die Einstellung eines minimalen Nachlaufes des Transportsystems. Durch die Verminderung der Relativbewegung zwischen Transportsystem und Produkt wird die Markierungsgefahr reduziert.

Weiterhin ist es möglich, eine Optimierung der Bewegungsabläufe des Transportsystems und der Messerbewegung durchzuführen. Durch die Realisation unharmonischer Bewegungsabläufe ist es beispielsweise möglich, die Messer nach erfolgtem Schnitt schnell vom Produkt wegzubewegen, so dass ein schneller Weitertransport des Produktes ermöglicht wird. Sofort nach erfolgtem Schnitt, wenn das Messer noch in der Aufwärtsbewegung sich befindet, kann der Abtransport des Produktes erfolgen.

Weitere Vorteile und vorteilhafte Ausführungsformen der Erfindung werden anhand der nachfolgenden Figuren sowie deren Beschreibungen dargestellt.

Es zeigen im einzelnen:
- Fig. 1: Ansicht der Schneideeinrichtung zum Randbeschneiden von Produkten,
- Fig. 2: Ansicht der Antriebe des Transportsystems und der Messerbewegung,
- Fig. 3: detaillierte Ansicht des Transportsystems,
- Fig. 4: weiteres Beispiel für den Antrieb des Transportsystems,
- Fig. 5: Blockschaltbild einer Ausführungsform des erfindungsgemäßen Schrittantriebs.

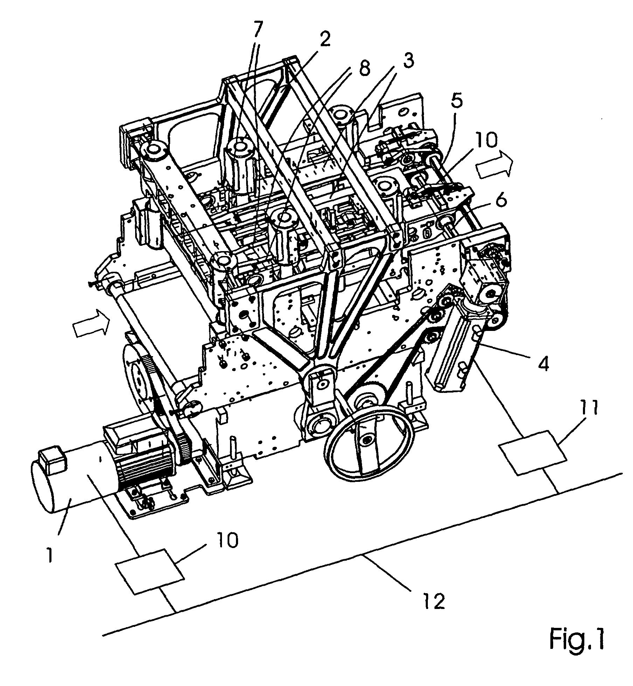

Ein repräsentatives Beispiel für eine Schneideeinrichtung zum Randbeschneiden mit getrennten Antriebsvorrichtungen wird in Fig. 1 gezeigt. Ein erster Antriebsmotor 1 realisiert die Bewegung der Messerhubeinrichtung 2, an welcher die Messer befestigt sind. Die Produktlaufrichtung ist durch Pfeile gekennzeichnet. Ein zweiter Antriebsmotor 4 treibt über eine erste und zweite Antriebswelle 5, 6 die Bänder 7, 8 des Transportsystems 9 an. Für beide Antriebsmotoren 1, 4 sind Steuereinheiten 10, 11 vorgesehen, welche mittels einer Verbindung zum Austausch von Daten und/oder Steuersignalen 12 miteinander kommunizieren können. Weiterhin kann die Verbindung 12 auch zu einer Maschinensteuereinheit führen.

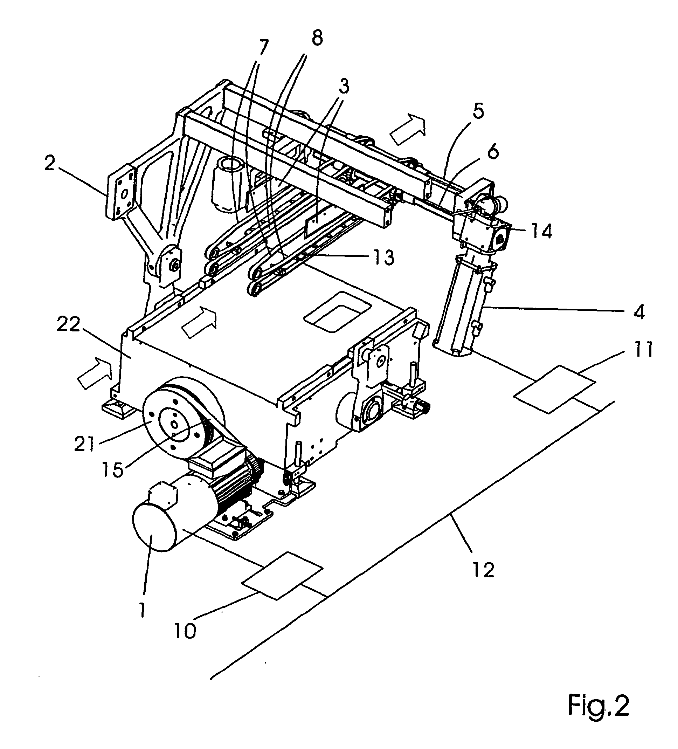

Die wesentlichen Elemente der die zwei Bewegungsabläufe realisierenden Antriebe sind in der Fig. 2. erkennbar. Der erste Antriebsmotor 1 realisiert vermittels des Zahnriemens 15 der Zahnriemenscheibe 21 und des Getriebes 22 die vertikale unharmonische Oszillationsbewegung der Messerhubeinrichtung 2. Die Messer 3 werden während des Schneidevorgangs gegen das Messer 13 gedrückt. Der zweite Antriebsmotor 4 treibt vermittels eines mechanischen Getriebes 14 die Wellen 5, 6, so dass die Bänder 7, 8 des Transportsystems bewegt werden. Die Pfeile geben die Produktlaufrichtung an.

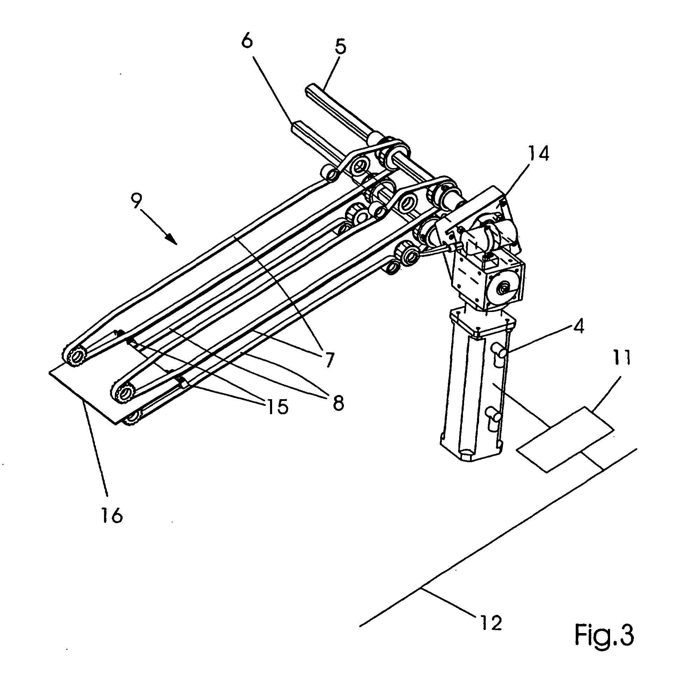

In der Fig. 3 ist das Transportsystem für sich dargestellt. Der Antriebsmotor 4 treibt vermittels eines mechanischen Getriebes 14 die Antriebswellen 5 und 6 die Bänder 7, 8 des Transportsystems 9 an. Weiterhin ist die Steuereinheit 11 und die Verbindung zum Austausch von Daten und/oder Steuersignalen 12 zu sehen. Die Produkte werden, von einem weiteren, nicht gezeigten Transportsystem aus der Auslage einer Heftmaschiene kommend, an den vorderen Stoppern 15 abgebremst. Durch die elektronische Steuerung vermittels der Steuereinheit 11 ist es möglich, das Produkt auch bei hohen Geschwindigkeiten sanft an die vorderen Stopper 15 heranzuführen.

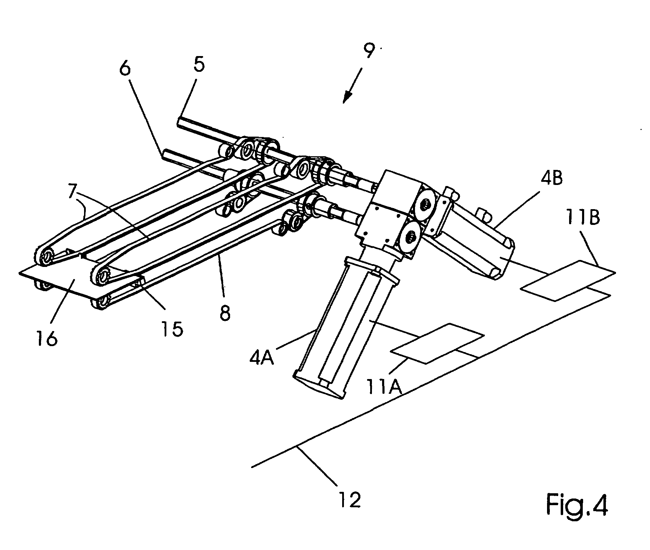

Ein weiteres Beispiel für den Antrieb des Transportsystems ist in Fig. 4 dargestellt. In dieser Ausführungsform werden die Antriebswellen 5 bzw. 6 die Bänder 7, 8 des Transportssystems 9 durch zwei Antriebsmotoren 4A, 4B mit zugehörigen Steuereinheiten 11A, 11B betrieben. Die Kopplung beider Antriebsmotoren 4A, 4B erfolgt über die Verbindung zum Austausch von Daten und/oder Steuersignalen 12, welche darüber hinaus noch zur Steuereinheit der Messerhubeinrichtung oder zur Maschinensteuereinheit führen kann. Das über dieses System transportierte Produkt 16 wird an den vorderen Stoppern 15 abgebremst. In dieser Ausführungsform ist es zusätzlich zur beschriebenen gesteuerten Bewegung der Transportbänder zur sanften Abbremsung des Produktes möglich, eine Relativbewegung der Transportbänder gegeneinander zu erwirken. Im allgemeinen ist es aber vorteilhaft, die Bewegung beider Antriebe und damit beider Transportbänder zu koordinieren.

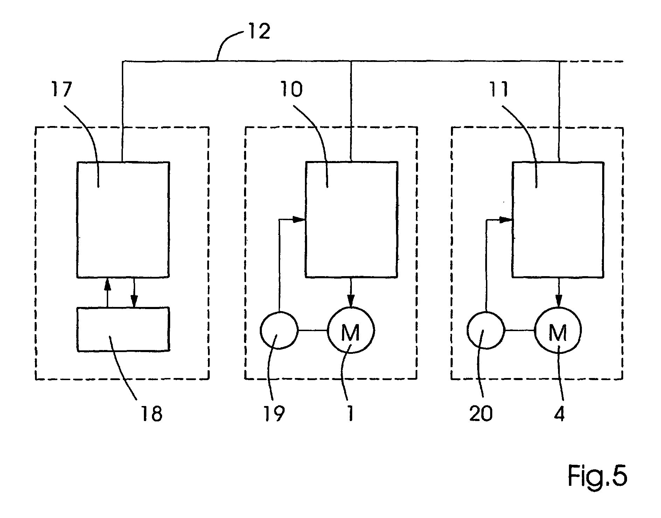

Fig. 5 zeigt das Blockschaltbild einer Ausführungsform des erfindungsgemäßen Schrittantriebs. Der Antriebsmotor 1 für die Messerbewegung ist mit der Steuereinheit 10 in der Art verbunden, dass eine Regelung der Winkelposition der Motorwelle, eine sogenannte Lageregelung erfolgen kann. Für die Lageregelung dient ein Positionsgeber 19. Der Antriebsmotor 4 für das Transportsystem 9 ist mit der Steuereinheit 11 ebenfalls in der Art verbunden, dass eine Lageregelung erfolgen kann. Für die Lageregelung dient ein Positionsgeber 20. Die Steuereinheiten 10 bzw. 11 sind über die Verbindung zum Austausch von Daten und/oder Steuersignalen 12 untereinander und mit der Maschinensteuereinheit 17 gekoppelt. Die Maschinensteuereinheit 17 besitzt üblicherweise Mensch-Maschine-Interface 18, über das Einstellungen vorgenommen werden können. Vorgesehen sind insbesondere Einstellungen, welche der Maschine Informationen über Format und Dicke der Produkte, Materialeigenschaften der Produkte und gewünschte Geschwindigkeit mitteilen.

Für die einzelnen zu bearbeitenden Formate und Materialien werden in der elektronischen Steuerung Informationen zur Realisierung der einzelnen Bewegungsabläufe des Transportsystems und der Messer hinterlegt. Ein Maschinenbediener kann vermittels des Mensch-Maschine-Interfaces 18 die relevanten Produktparameter eingeben oder aber bestimmte Kombinationen auswählen. Die Maschinensteuerung übernimmt dann die Durchführung der zugeordneten Bewegungsabläufe, welche für diese Parameter vorgesehen sind.

### Bezugszeichenliste

- 1: Antriebsmotor für Messer
- 2: Messerhubeinrichtung
- 3: Messer
- 4: Antriebsmotor für Transportsystem
- 5: Antriebswelle
- 6: Antriebswelle
- 7: obere Transportbänder
- 8: untere Transportbänder
- 9: Transportsystem
- 10: Steuereinheit
- 11: Steuereinheit
- 12: Verbindung zum Austausch von Daten und/oder Steuersignalen
- 13: Messer
- 14: mechanisches Getriebe
- 15: vordere Stopper
- 16: Produkt
- 4A: Antriebsmotor für obere Transportbänder
- 4B: Antriebsmotor für untere Transportbänder
- 11A: Steuereinheit für Antriebsmotor 4A
- 11B: Steuereinheit für Antriebsmotor 4B
- 17: Maschinensteuereinheit
- 18: Mensch-Maschine-Interface
- 19: Positionsgeber
- 20: Positionsgeber
- 21: Zahnriemenscheibe
- 22: Getriebe

## Patentansprüche

1. Schneideeinrichtung zum Randbeschneiden von Produkten (16), insbesondere gehefteten oder in sonstiger Weise miteinander verbundenen Papierbogen mit einer Hubvorrichtung (2) zum Bewegen von den Randbeschnitt durchführenden Messern (3, 13), wobei die Messer (3. 1 3) an der Hubvorrichtung (2) befestigt sind mit einem ersten, die Hubvorrichtung (2) antreibenden Antrieb (1), sowie einer Transporteinrichtung (9) zum Transportieren der Produkte (16) von einer ersten Schneidestation zu einer zweiten Schneidestation, und einem zweiten, die Transporteinrichtung (9) antreibenden Antrieb (4),
**dadurch gekennzeichnet,**
**dass** der erste (4) und zweite Antrieb (1) als eigenständige, voneinander unabhängige Antriebe (1,4) ausgeführt sind, wobei die beiden Antriebe (1,4) über eine Steuereinheit (10, 11) miteinander verbunden sind.

2. Schneideeinrichtung nach Anspruch 1,
**dadurch gekennzeichnet,**
**dass** der erste Antrieb (1) mit einer ersten Steuereinheit (10) und der zweite Antrieb (4) mit einer zweiten Steuereinheit (11) und die erste mit der zweiten Steuereinheit durch eine Verbindung (12) verknüpft ist.

3. Schneideeinrichtung nach Anspruch 1,
**dadurch gekennzeichnet,**
**dass** die erste und zweite Steuereinheit (10, 11) jeweils eine separate Einstellung eines Geschwindigkeitsprofils oder einer elektronischen Kurvenscheibe des ersten Antriebes (1) und des zweiten Antriebes (4) ermöglichen.

4. Schneideeinrichtung nach einem der Ansprüche 1 bis 3,
**dadurch gekennzeichnet,**
**dass** der erste Antrieb (1) mit einer ersten Steuereinheit (10) und der zweite Antrieb (4) mit einer zweiten Steuereinheit (11) mit einer Maschinensteuereinheit (17) verbunden sind.

5. Schneideeinrichtung nach Anspruch 4,
**dadurch gekennzeichnet,**
**dass** die Maschinensteuereinheit (17) ein Mensch-Maschine-Interface (18) aufweist.

6. Schneideeinrichtung nach mindestens einem der Ansprüche 1 bis 5,
**dadurch gekennzeichnet,**
**dass** mit zumindest einer Steuereinheit (10, 11) eine Lageregelung des entsprechenden Motors erfolgen kann und dass jeweils ein Positionsgeber (19, 20) vorgesehen ist.

7. Schneideeinrichtung nach wenigstens einem der Ansprüche 1 bis 6,
**dadurch gekennzeichnet,**
**dass** wenigstens eine Steuereinheit (10, 11) für den jeweiligen Motor (1, 4) eine speicherprogrammierte Steuerung aufweist.

8. Verfahren zum Zandschneiden von Produkten (16), insbesondere gehefteten oder in sonstiger Weise miteinander verbundenen Papierbogen
**gekennzeichnet durch**
folgende Schritte:
- Transportieren der Produkte (16) zu einer ersten Schneidestation mit einer Transporteinrichtung (9), die einen zweiten separaten Antrieb (4) und eine Steuereinheit (11) aufweist,
- Durchführen eines ersten Schnittes mit einem Messer (3, 13), das an einer Hubstation (2) befestigt ist, deren Bewegung mit einem ersten separaten Antrieb (1) erfolgt, der mit einer Steuereinheit (10) verbunden ist,
- Transportieren der Produkte zu einer zweiten Schneidestation mit einer Transporteinrichtung (9), die einen zweiten separaten Antrieb (4) und eine Steuereinheit (11) aufweist,
- Durchführen eines zweiten Schnittes mit einem Messer, das an einer Hubstation (2) befestigt ist, deren Bewegung mit einem ersten separaten Antrieb (1) erfolgt, der mit einer Steuereinheit (10) verbunden ist.

9. Sammelhefter,
**dadurch gekennzeichnet,**
das dieser eine Schneideeinrichtung gemäß Anspruch 1 bis 7 aufweist.

## Claims

1. Cutting device for trimming the margins of products (16), in particular of paper sheets that are stitched or otherwise connected to each other, the device comprising a lifting device (2) for moving knives (3, 13) that carry out the trimming operation and are attached to the lifting device (2), a first drive (1) driving the lifting device (2), and a transport device (9) for transporting the products (16) from a first cutting station to a second cutting station, and a second drive (4) driving the transport device (9),
**characterized in**
**that** the first (4) and second (1) drives are designed as separate drives (1, 4) that are independent of each other and connected to each other via a control unit (10, 11).

2. Cutting device according to claim 1,
**characterized in**
**that** the first drive (1) is connected to a first control unit (10) and the second drive (4) is connected to a second control unit (11) and the first control unit (10) is connected to the second control unit (11) by a connection (12).

3. Cutting device according to claim 1,
**characterized in**
**that**, due to the first and second control units (10, 11), a respective separate setting of a velocity profile or of an electronic cam disk of the first drive (1) and the second drive (4) is possible.

4. Cutting device according to one of claims 1 to 3,
**characterized in**
**that** the first drive (1) is connected to a first control unit (10) and the second drive (4) is connected to a second control unit (11) with a machine control unit (17).

5. Cutting device according to claim 4,
**characterized in**
**that** the machine control unit (17) has a human-machine interface (18).

6. Cutting device according to one of claims 1 to 5,
**characterized in**
**that** at least one control unit (10, 11) is usable to provide a position regulation of the corresponding motor and that a respective position transducer (19, 20) is provided.

7. Cutting device according to at least one of claims 1 to 6,
**characterized in**
**that** at least one control unit (10, 11) has a memory-programmable control for the respective motor (1, 4).

8. Method of cutting the margins of products (16), in particular of paper sheets that are stitched or otherwise connected to each other,
**characterized by**
the following steps:
- transporting the products (16) to a first cutting station by means of a transport device (9) having a second separate drive (4) and a control unit (11),
- making a first cut with the aid of a knife (3, 13) attached to a lifting device (2) the motion of which is driven by a first separate drive (1) connected to a control unit (10),
- transporting the products to a second cutting station by means of a transport device (9) having a second separate drive (4) and a control unit (11),
- making a second cut with the aid of a knife attached to a lifting device (2) the motion of which is driven by a first separate drive (1) connected to a control unit (10).

9. Saddle stitcher,
**characterized in**
**that** the latter has a cutting device according to claims 1 to 7.

## Revendications

1. Dispositif de coupe pour la coupe de bordure ou le rognage de produits (16), notamment de feuilles de papier agrafées ou reliées d'une autre manière quelconque, comprenant un mécanisme de course de déplacement (2) pour déplacer les couteaux (3, 13) effectuant la coupe de bordure ou le rognage, les couteaux (3, 13) étant fixés au mécanisme de course de déplacement (2), l'ensemble comprenant également un premier système d'entraînement (1) qui entraîne le mécanisme de course de déplacement (2), ainsi qu'un dispositif de transport (9) pour transporter les produits (16) d'un premier poste de coupe à un second poste de coupe, et un second système d'entraînement (4) qui entraîne le dispositif de transport (9),
**caractérisé en ce que** le premier (1) et le second système d'entraînement (4) sont réalisés sous forme de systèmes d'entraînement (1, 4) distincts autonomes, indépendants l'un de l'autre, les deux systèmes d'entraînement (1, 4) étant reliés par l'intermédiaire d'une unité de commande (10, 11).

2. Dispositif de coupe selon la revendication 1,
**caractérisé en ce que** le premier système d'entraînement (1) est combiné à une première unité de commande (10) et le second système d'entraînement (4) à une seconde unité de commande (11), et la première unité de commande est combinée à la seconde par l'intermédiaire d'une liaison (12).

3. Dispositif de coupe selon la revendication 1,
**caractérisé en ce que** la première et la seconde unité de commande (10, 11) permettent respectivement un réglage séparé d'un profil de vitesse ou d'un disque de came électronique du premier système d'entraînement (1) et du second système d'entraînement (4).

4. Dispositif de coupe selon l'une des revendications 1 à 3,
**caractérisé en ce que** le premier système d'entraînement (1) et le second système d'entraînement (4) sont reliés, respectivement par l'intermédiaire d'une première unité de commande (10) et d'une seconde unité de commande (11), à une unité de commande de machine (17).

5. Dispositif de coupe selon la revendication 4,
**caractérisé en ce que** l'unité de commande de machine (17) comprend une interface homme-machine (18).

6. Dispositif de coupe selon l'une au moins des revendications 1 à 5, **caractérisé en ce qu'**avec au moins une unité de commande (10, 11) il est possible d'effectuer une régulation de position du moteur correspondant, et **en ce qu'**il est prévu respectivement un capteur de position (19, 20).

7. Dispositif de coupe selon l'une au moins des revendications 1 à 6, **caractérisé en ce qu'**au moins une unité de commande (10, 11) comprend pour le moteur respectif (1, 4), une commande programmée à mémoire.

8. Procédé pour la coupe de bordure ou le rognage de produits (16), notamment de feuilles de papier agrafées ou reliées d'une autre manière quelconque,
**caractérisé par** les étapes suivantes :
- transport des produits (16) vers un premier poste de coupe à l'aide d'un dispositif de transport (9) qui présente un second système d'entraînement (4) séparé, et une unité de commande (11),
- exécution d'une première coupe à l'aide d'un couteau (3, 13), qui est fixé à un poste de course de déplacement (2), dont le mouvement s'effectue à l'aide d'un premier système d'entraînement (1) séparé, qui est relié à une unité de commande (10),
- transport des produits vers un second poste de coupe à l'aide d'un dispositif de transport (9) qui présente un second système d'entraînement (4) séparé, et une unité de commande (11),
- exécution d'une seconde coupe à l'aide d'un couteau, qui est fixé à un poste de course de déplacement (2), dont le mouvement s'effectue à l'aide d'un premier système d'entraînement (1) séparé, qui est relié à une unité de commande (10).

9. Encarteuse-piqueuse **caractérisée en ce qu'**elle comprend un dispositif de coupe selon les revendications 1 à 7.
